# EUROPÄISCHE PATENTSCHRIFT

(11) **EP 1 264 018 B1**
(45) Veröffentlichungstag und Bekanntmachung des Hinweises auf die Patenterteilung: **12.12.2007**
(21) Anmeldenummer: 01929233.3
(22) Anmeldetag: 07.03.2001
(51) Int. Cl.: D01F 9/10, C04B 35/622, C04B 35/624, C03B 37/01, B01D 69/08

(54) **ANORGANISCHE HOHLFASERN**
INORGANIC HOLLOW FIBERS
FIBRES CREUSES INORGANIQUES

(30) Priorität: 14.03.2000 DE 10012308
(43) Veröffentlichungstag der Anmeldung: 11.12.2002
(73) Patentinhaber: Fraunhofer-Gesellschaft zur Förderung der angewandten Forschung e.V., 80686 München (DE)
(72) Erfinder: WOLTER, Herbert, 97941 Tauberbischofsheim (DE); STORCH, Werner, 97204 Höchberg (DE); BALLWEG, Thomas, 97877 Wertheim (DE)
(74) Vertreter: Olgemöller, Luitgard Maria
(86) Internationale Anmeldenummer: PCT/DE2001/000900
(87) Internationale Veröffentlichungsnummer: WO 2001/068961

(56) Entgegenhaltungen:
- EP-A- 0 263 406
- EP-A- 0 591 812
- DE-A- 2 758 415
- DE-A- 4 011 044
- DE-A- 19 627 198
- DE-A- 19 627 220
- DE-A- 19 701 751
- DE-C- 4 416 857
- WOLTER H, BALLWEG T: "Hohlfasern aus hybriden Polymeren" GAK, Bd. 53, Nr. 4, 2000, Seiten 277-281,

## Beschreibung

Die Erfindung betrifft anorganische Hohlfasern und ein Verfahren zu deren Herstellung sowie deren Verwendung für Stofftransporte, für den Gasaustausch und in Trennverfahren, insbesondere in der Gasseparation, in der Dialyse, in der Pervaporation, sowie in der Mikro-, Ultra- und Hyperfiltration.

Zur Trennung von Stoffgemischen sind die verschiedensten Membranmaterialien bekannt, die alle im Hinblick auf ihre technische Einsatzfähigkeit und ihre Wirtschaftlichkeit verbesserungsfähig sind. So sind bekannte Membranmaterialien, wie z.B. Celluloseacetat, wenig temperatur- und druckbeständig und quellen in organischen Lösungsmitteln stark. Die geringe Temperatur-, Druck- und Lösungsmittelbeständigkeit hat zur Folge, dass sich die Porengröße im technischen Einsatz ständig ändert und dadurch zu nicht reproduzierbaren Ergebnissen sowie zu kurzen Standzeiten der Membranen führen kann.

Ultrafiltrationen z.B. werden überwiegend in wässrigen Systemen durchgeführt, so dass an die mechanische und thermische Stabilität (Sterilisierbarkeit bis 140°C) der hierfür eingesetzten Membranen, an deren Beständigkeit gegenüber Säuren und Alkalien und deren gezielt einstellbare hydrophile/hydrophobe Eigenschaften besonders hohe Anforderungen gestellt werden. Die bisher zur Membranherstellung eingesetzten Polymere können diese Anforderungen nicht gleichzeitig erfüllen und zeigen z.B. bei relativ guter thermischer Beständigkeit bis etwa 140 °C keine ausreichende mechanische Stabilität.

Prinzipiell wird zwischen porösen und nicht-porösen Membranen mit jeweils unterschiedlichen Mechanismen des Stofftransportes unterschieden.

Sehr hohe Gas-Permeationswerte ohne Porosität sind nur mit ganz speziellen Polymeren (Silicone, substituierte Polysilylpropine, Polyimide etc.) realisierbar. Die hohe Gasdurchlässigkeit wird allerdings nur durch extreme Einbußen bei den mechanischen Eigenschaften erreicht. Mit steigender Permeabilität nimmt die Festigkeit und der E-Modul ab, d.h. das Material wird zunehmend weicher. Freitragende stabile Hohlfasern mit geringer Wandstärke sind somit nicht möglich.

Die chemische und die thermische Stabilität von porösen SiO₂-Hohlfasern in Gegenwart von Wasserdampf ist nicht besonders befriedigend. Derartige Hohlfasern weisen Defizite in der hydrolytischen Beständigkeit, insbesondere in der Laugenbeständigkeit auf.

In DE 197 01 751 A1 werden Mikrohohlfasern beschrieben, die aus einer Masse auf Basis von Porzellan bzw. eines zeolithischen Magnesium-Alumosilicats hergestellt werden.

Aufgabe der vorliegenden Erfindung ist es, Hohlfasern und Hohlfasermembranen für den Transport von Stoffen, für Stofftrennungen und für den Gasaustausch bereitzustellen, deren Austauschvermögen über weite Bereiche variiert und den Erfordernissen des jeweiligen Anwendungsfalles angepasst werden kann. Insbesondere sollen die Porosität, die Porengröße und die Porengrößenverteilung variierbar und einstellbar sein. Die Porengrößen sollen auch im Nanometer- und im Subnanometer-Bereich liegen. Die Selektivität und die Trenneigenschaften der Hohlfasermembranen sollen über weite Bereiche variiert und den Anforderungen des jeweiligen Anwendungsfalles angepasst werden können. Ferner sollen die Hohlfasern bei hoher mechanischer Stabilität hohe Slektivitäten zeigen, insbesondere auch gegenüber Gasen, damit sie auch für den Gasaustausch und für Stofftrennungen eingesetzt werden können. Die Hohlfasern sollen für bestimmte Anwendungen toxikologisch unbedenklich und damit im medizinischen Bereich anwendbar sein.

Ferner ist es Aufgabe der vorliegenden Erfindung, ein Verfahren bereit zustellen, mit dem Hohlfasern und Hohlfasermembranen gefertigt werden können, deren Eigenschaftsprofil in weiten Bereichen variierbar ist. Durch einfache Variation der Verfahrensschritte sollen die chemischen und physikalischen Eigenschaften der Hohlfasern in weiten Bereichen den Anforderungen des jeweiligen Anwendungsfalles angepasst werden können. Das Verfahren soll einfach, schnell und kostengünstig durchführbar sein. Mit dem Verfahren sollen Hohlfasern und Hohlfasermembranen gefertigt werden können, die den oben genannten Anforderungen entsprechen. Ferner soll das Verfahren auch für die Endlosproduktion von Hohlfasern geeignet sein.

Gelöst wird diese Aufgabe durch Hohlfasern, die dadurch erhältlich sind, dass man eine Spinnmasse nach üblichen Methoden zu Hohlfasern verarbeitet und diese gegebenenfalls trocknet. Anschließend wird die resultierende Hohlfaser durch Polymerisation und/oder durch Polyaddition gehärtet. Diese Härtung kann z.B. thermisch und/oder strahlungsinduziert und/oder chemisch induziert erfolgen. Aus der resultierenden, gehärteten Hohlfaser werden die organischen Bestandteile durch Pyrolyse entfernt.

Die Spinnmasse, aus der die Hohlfasern gefertigt werden, wird erhalten
a) durch hydrolytische Polykondensation von
   - einer oder mehreren Verbindungen der allgemeinen Formel I und/oder von diesen abgeleiteten Vorkondensaten,

      SiXₐR'_{b}R(_{4-a-b)} (I)

      in der die Reste und Indices folgende Bedeutung haben:
      - R =: Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/ oder Amid- und/oder Amino-Gruppen enthalten können,
      - R' =: organischer Rest mit 1 bis 50 Kohlenstoff-Atomen und mit mindestens einer polymerisierbaren oder polyaddierbaren Gruppe
      - X =: Wasserstoff, Halogen, Hydroxy, Alkoxy, Acyloxy, Alkylcarbonyl, Alkoxycarbonyl oder NR"₂, mit R" = Wasserstoff, Alkyl oder Aryl,
      - a =: 1, 2 oder 3,
      - b =: 1, 2 oder 3, mit a+b = 2, 3 oder 4,
   - und einer oder mehreren, gegebenenfalls komplexierten Verbindungen der allgemeinen Formeln II und/oder III und/oder von diesen abgeleiteten Vorkondensaten,

      M¹R°₃ (II)

      M²X_{y}R_{z} (III)

      wobei M¹ Aluminium oder Bor und M² Titan oder Zirkonium bedeutet, die Reste X, R° und R gleich oder verschieden sind, R° = Halogen. Hydroxy, Alkoxy oder Acyloxy darstellt, y eine ganze Zahl von 1 bis 4 ist, z für 0 1, 2, oder 3 mit y+z=4 steht, und X und R wie im Falle der allgemeinen Formel I definiert sind,
      und gegebenenfalls
      ■ von einer oder mehreren Verbindungen der allgemeinen Formel IV und/oder von diesen abgeleiteten Vorkondensaten,

         XₐSiR₄₋ₐ (IV)

         in der die Reste und Indices folgende Bedeutung haben:
         - R =: Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
         - X =: Wasserstoff, Halogen, Hydroxy, Alkoxy, Acyloxy. Alkylcarbonyl, Alkoxycarbonyl oder NR"₂,
         mit R" = Wasserstoff, Alkyl, Aryl oder Alkylaryl,
         - a =: 1, 2 oder 3,
         und/oder
   - von einer oder mehreren cokondensierbaren Verbindungen der Elemente Li, Na, Mg, Ca, Sr, Ba, Zn, Sn oder Pb,
   und gegebenenfalls
b) durch Zugabe
   ■ von einem oder mehreren copolymerisierbaren und/oder (poly)addierbaren Monomeren und/oder Oligomeren,
   ■ und/oder von einem oder mehreren Härtungskatalysatoren,
   ■ und/oder von einem oder mehreren Poren erzeugenden Additiven, und/oder von einer oder mehreren im Reaktionsmedium löslichen Verbindungen der Elemente Li, Na, Mg, Ca, Sr, Ba, Zn, Sn und Pb.

Die hydrolytische Polykondensation wird durch Zugabe von Wasser oder Feuchtigkeit und gegebenenfalls in Anwesenheit eines Lösungsmittels und/oder eines Kondensationskatalysators durchgeführt. Bezogen auf die Monomeren liegt das molare Verhältnis der Verbindung der Formel I zur Summe der Verbindungen der Formeln II und III zwischen 99:1 und 1:99.

Die zur Herstellung der erfindungsgemäßen Hohlfasern eingesetzte Spinnmasse stellt ein Polykondensat aus hydrolytisch kondensierten Silicium-Verbindungen der Formeln I und hydrolytisch kondensierten Verbindungen der Formeln II und/oder III dar. Gegebenenfalls enthält die Spinnmasse noch hydrolytisch kondensierte Verbindungen der allgemeinen Formel IV und/oder Cokondensate von Verbindungen der Elemente Li, Na, Mg, Ca, Sr, Ba, Zn, Sn oder Pb. Das Polykondensat enthält gegebenenfalls noch Wasser und/oder Lösungsmittel und/oder die oben genannten Zusatzstoffe. In Abhängigkeit von der Viskosität des Polykondensates kann man von einer mehr oder weniger viskosen Flüssigkeit oder von einem Harz reden.

In bevorzugten Ausführungsformen der Spinnmasse werden als Verbindungen der allgemeinen Formel I Verbindungen der allgemeinen Formel eingesetzt

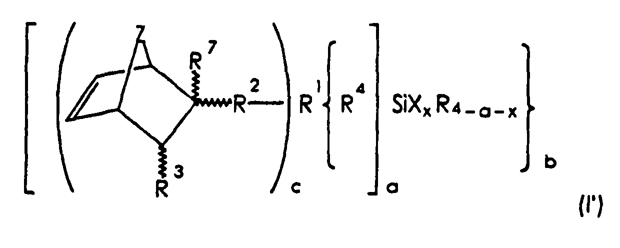

In der allgemeinen Formel I' haben die Reste und Indices folgende Bedeutung, wobei bei Indices ≥ 2 die diesbezüglichen Reste gleich oder verschieden sind.
- R: = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R¹: = Alkylen, Arylen, Arylenalkylen oder Arylenalkylen mit jeweils 0 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R²: = Alkylen, Arylen. Arylenalkylen oder Arylenalkylen mit jeweils 0 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R³: = Wasserstoff, R²-R¹-R⁴-SiXₓR₃₋ₓ, Carboxyl-, Alkyl,'Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und /oder Carboxyl- und/oder Amid- und/oder Amino-Gruppen enthalten können.
- R⁴: = -(CHR⁶-CHR⁶)ₙ-, mit n = 0 oder 1, -CHR⁶-CHR⁶-S-R⁵-, -CO-S-R⁵-, -CHR⁶-CHR⁶-NR⁶-R⁵-, -Y-CS-NH-R⁵, -S-R⁵, -Y-CO-NH-R⁵-, -CO-O-R⁵-, -Y-CO-C₂H₃(COOH)-R⁵-, -Y-CO-C₂H₃(OH)-R⁵- oder -CO-NR⁶-R⁵-,
- R⁵: = Alkylen, Arylen, Arylenalkylen oder Arylenalkylen mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R⁶: = Wasserstoff, Alkyl oder Aryl mit 1 bis 10 Kohlenstoff-Atomen.
- R⁷: = Wasserstoff, Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- X: = Wasserstoff, Halogen, Hydroxy, Alkoxy, Acyloxy, Alkylcarbonyl, Alkoxycarbonyl oder NR"₂, mit R" = Wasserstoff, Alkyl, Alkylaryl oder Aryl.
- Y: = -O-, -S-oder-NR⁶-.
- Z: = -O- oder -(CHR⁶)ₘ-, mit m = 1 oder 2.
- a: = 1, 2 oder 3, mit b = 1 für a = 2 oder 3.
- b: = 1, 2 oder 3, mit a = 1 für b = 2 oder 3.
- c: = 1 bis 6.
- x: = 1, 2 oder 3, mit a+x = 2, 3 oder 4.

Organisch modifizierte Silane der allgemeinen Formel I', deren Herstellung sowie konkrete Beispiele sind in der DE 19627198 C2 ausführlichst beschrieben. Auf die Offenbarung der DE 19627198 C2 wird hier ausdrücklich Bezug genommen. In besonders bevorzugten Ausführungsformen der erfindungsgemäßen Hohlfasern werden organisch modifizierte Silane der allgemeinen Formel I' und/oder davon abgeleitete Vorkondensate eingesetzt, in denen die Indices a und/oder b und/oder c den Wert 1 annehmen.

In weiteren bevorzugten Ausführungsformen der erfindungsgemäßen Hohlfasern werden als Verbindungen der allgemeinen Formel I Verbindungen der allgemeinen Formel I" eingesetzt.

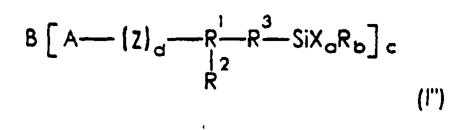

In der allgemeinen Formel I" haben die Reste und Indices folgende Bedeutung, wobei bei Indices ≥ 2 die diesbezüglichen Reste gleich oder verschieden sind.
- B: = ein geradkettiger oder verzweigter organischer Rest mit mindestens einer C=C-Doppelbindung und 4 bis 50 Kohlenstoff-Atomen.
- R: = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R³: = Alkylen, Arylen, Arylenalkylen oder Alkylenarylen mit jeweils 0 bis 15 Kohlenstoff-Atomen, wobei diese Reste durch Sauerstoff- und/oder durch Schwefel-Atome und/oder durch Amino-Gruppen unterbrochen sein können.
- X: = Wasserstoff, Halogen, Hydroxy, Alkoxy, Acyloxy, Alkylcarbonyl, Alkoxycarbonyl oder NR"₂, mit R"= Wasserstoff, Alkyl, Aryl oder Alkylaryl.
- A: = O, S oder NH für d = 1 und Z = CO und
R¹ = Alkylen, Arylen oder Alkylenarylen mit jeweils 1 bis 10 Kohlenstoff-Atomen, wobei diese Reste durch Sauerstoff- und/oder durch Schwefel-Atome und/oder durch Amino-Gruppen unterbrochen sein können, und
R² = COOH oder H. oder
- A: = O, S, NH oder COO für d = 1 und Z = CHR', mit R' = H, Alkyl, Aryl oder Alkylaryl, und
R¹ = Alkylen, Arylen oder Alkylenarylen mit jeweils 1 bis 10 Kohlenstoff-Atomen, wobei diese Reste durch Sauerstoff- und/oder durch Schwefel-Atome und/oder durch Amino-Gruppen unterbrochen sein können, und
R² = OH. oder
- A: = O, S, NH oder COO für d = 0 und
R¹ = Alkylen, Arylen oder Alkylenarylen mit jeweils 1 bis 10 Kohlenstoff-Atomen, wobei diese Reste durch Sauerstoff- und/oder durch Schwefel-Atome und/oder durch Amino-Gruppen unterbrochen sein können, und
R² = OH. oder
- A: = S für d = 1 und Z = CO und
R¹ = N und
R² = H.
- a: = 1, 2 oder 3.
- b: = 0, 1 oder 2, mit a+b = 3.
- c: = 1, 2, 3 oder 4.

Organisch modifizierte Silane der allgemeinen Formel I", deren Herstellung sowie konkrete Beispiele sind in der DE 4416857 C1 ausführlichst beschrieben. Auf die Offenbarung der DE 4416857 C1 wird hier ausdrücklich Bezug genommen. In besonders bevorzugten Ausführungsformen der erfindungsgemäßen Hohlfasern werden organisch modifizierte Silane der allgemeinen Formel I" und/oder davon abgeleitete Vorkondensate eingesetzt, in denen die Alkyl- und/oder Alkylen- und/oder Alkoxy-Gruppen 1 bis 4 Kohlenstoff-Atome aufweisen. In weiteren besonders bevorzugten Ausführungsformen weist der Rest B der allgemeinen Formel I" eine oder mehrere Acrylat- und/oder Methacrylat-Gruppen auf.

In weiteren bevorzugten Ausführungsformen der erfindungsgemäßen Hohlfasern werden als Verbindungen der allgemeinen Formel 1 Verbindungen der allgemeinen Formel I"' eingesetzt.

{XₐR_{b}Si[(R'A)_{c}]_{(4-a-b)}}ₓB (I"')

In der allgemeinen Formel I"' haben die Reste und Indices folgende Bedeutung, wobei bei Indices ≥ 2 die diesbezüglichen Reste gleich oder verschieden sind.
- A: = O, S, PR", POR", NHC(O)O oder NHC(O)NR".
- B: geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoff-Atomen ableitet.
- R: = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R': = Alkylen, Arylen oder Alkyfenarylen.
- R": = Wasserstoff, Alkyl, Aryl oder Alkylaryl.
- X: = Wasserstoff, Halogen, Hydroxy, Alkoxy, Acyloxy, Alkylcarbonyl, Alkoxycarbonyl oder NR"₂.
- a: = 1, 2 oder 3.
- b: = 0, 1 oder 2.
- c: = 0 oder 1.
- x: = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht.

Die obigen Alkyl- bzw. Alkenyl-Reste sind gegebenenfalls substituierte geradkettige, verzweigte oder cyclische Reste mit 1 bzw. 2 bis 20 Kohlenstoff-Atomen. Aryl steht für gegebenenfalls substituiertes Phenyl, Naphthyl oder Biphenyl, und die obigen Alkoxy-, Acyloxy-, Alkylcarbonyl-, Alkoxycorbonyl-, Alkylaryl-, Arylalkyl-, Arylen-, Alkylen- und Alkylenaryl-Reste leiten sich von den oben definierten Alkyl- und Aryl-Resten ab.

Organisch modifizierte Silane der allgemeinen Formel I"', deren Herstellung sowie konkrete Beispiele sind in der DE 401 1044 C2 ausführlichst beschrieben. Auf die Offenbarung der DE 4011044 C2 wird hier ausdrücklich Bezug genommen. In besonders bevorzugten Ausführungsformen der erfindungsgemäßen Hohlfasern werden Silane der allgemeinen Formel I'" und/oder davon abgeleitete Vorkondensate eingesetzt, in denen der Rest B eine oder mehrere Acrylat- und/oder Methacrylat-Gruppen aufweist.

In weiteren bevorzugten Ausführungsformen der erfindungsgemäßen Hohlfasern werden als Verbindungen der allgemeinen Formel I Verbindungen der allgemeinen Formel I"" eingesetzt.

YₐSiXₓR₄₋ₐ₋ₓ (I"")

In der allgemeinen Formel I"" haben die Reste und Indices folgende Bedeutung, wobei bei Indices ≥ 2 die diesbezüglichen Reste gleich oder verschieden sind.
- R: = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- X: = Wasserstoff, Halogen, Hydroxy, Alkoxy, Acyloxy, Alkylcarbonyl, Alkoxycarbonyl oder NR"₂, mit R" = Wasserstoff. Alkyl, Aryl oder Alkylaryl.
- Y: = organischer Rest mit 1 bis 30, bevorzugt mit 1 bis 20 Kohlenstoff-Atomen und mit 1 bis 5, bevorzugt mit 1 bis 4 Mercapto-Gruppen.
- a: = 1, 2 oder 3.
- x: = 1, 2 oder 3, mit a+x = 2, 3 ode 4.

Die Alkyl-Reste sind z.B. geradkettige, verzweigte oder cyclische Reste mit 1 bis 20. insbesondere mit 1 bis 10 Kohlenstoff-Atomen und vorzugsweise niedere Alkyl-Reste mit 1, bis 6, besonders bevorzugt mit 1 bis 4 Kohlenstoff-Atomen. Spezielle Beispiele sind Methyl, Ethyl, n-Propyl, i-Propyl, n- Butyl, i-Butyl, s-Butyl, t-Butyl, n-Pentyl, n-Hexyl, Cyclohexyl, 2-Ethylhexyl, Dodecyl und Octadecyl. Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl. Bevorzugte Aryl-Reste sind Phenyl, Biphenyl und Naphthyl.

Die Alkoxy-, Acyloxy-, Alkylamino-. Dialkylomino-, Alkylcarbonyl-. Alkoxycarbonyl-, Arylaklyl-, Alkyloryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t- Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, trialkylammonium. Amido. Hydroxy, Formyl, Carboxy, Mercapto, Cyano, Isocyanato, Nitro, Epoxy, SO₃H oder PO₄H₂. Unter den Halogenen sind Fluor, Chlor und Brom und insbesondere Chlor bevorzugt.

In besonders bevorzugten Ausführungsformen der erfindungsgemäßen Hohlfasern werden als Silane der allgemeinen Formel I"" Silane der allgemeinen Formel V

[(HS-R⁵)ₙR⁶-S-E-R⁵]ₐSiXₓR₄₋ₐ₋ₓ (V)

eingesetzt, in der die Reste und Indices folgende Bedeutung haben:
- E: = -CO-NH-, -CS-NH-, -CH₂-CH₂- oder -CH₂-CH(OH)-
- R: = wie im Falle der allgemeinen Formel IV definiert;
- R⁵: = Alkylen, Arylen, Arylenalkylen oder Arylenalkylen mit jeweils 1 bis 20 Kohlenstoff-Atomen, wobei diese Reste durch Sauerstoff- und/oder durch Schwefel-Atome und/oder durch Ester- und/oder durch Carbonyl- und/oder durch Carboxyl- und/oder durch Amid- und/oder durch Amino-Gruppen unterbrochen sein können;
- R⁶: = Alkylen, Arylen, Arylenalkylen oder Arylenolkylen mit jeweils 1 bis 20 Kohlenstoff-Atomen, wobei diese Reste durch Sauerstoff- und/oder durch Schwefel-Atome und/oder durch Ester- und/oder durch Carbonyl- und/oder durch Carboxyl- und/oder durch Amid- und/oder durch Amino-Gruppen unterbrochen sein können;
- X: = wie im Folie der allgemeinen Formel IV definiert;
- a: = wie im Falle der allgemeinen Formel IV definiert;
- n: = 2, 3, 4 oder 5;
- x: = wie im Falle der allgemeinen Formel IV definiert.

Derartige organisch modifizierte Silane, deren Herstellung sowie konkrete Beispiele sind in der DE 19627220 C2 ausführlichst beschrieben. Auf die Offenbarung der DE 19627220 C2 wird hier ausdrücklich Bezug genommen.

In der allgemeinen Formel IV haben die Reste und Indices folgende Bedeutung wobei bei Indices ≥ 2 die diesbezüglichen Reste gleich oder verschieden sind.

XₐSiR₄₋ₐ (IV)

- R: = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- X: = Wasserstoff, Halogen, Hydroxy, Alkoxy. Acyloxy, Alkylcarbonyl, Alkoxycorbonyl oder NR"₂, mit R" = Wasserstoff, Alkyl, Aryl oder Alkylaryl.
- a: = 1, 2 oder 3.

Die Alkyl-Reste sind z.B. geradkettige, verzweigte oder cyclische Reste mit 1 bis 20. insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n- Butyl, i-Butyl, s-Butyl, t-Butyl, n-Pentyl, n-Hexyl, Cyclohexyl, 2-Ethylhexyl, Dodecyl und Octadecyl. Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl. Bevorzugte Aryl-Reste sind Phenyl, Biphenyl und Naphthyl.

Die Alkoxy-, Acyloxy-, Alkylamino-, Diolkylamino-, Alkylcarbonyl-, Alkoxycarbonyl-, Arylaklyl-, Alkylaryl-, Alkylen- und Alkylenarylen-Reste leiten sich vorzugsweise von den oben genannten Alkyl- und Aryl-Resten ob. Spezielle Beispiele sind Methoxy, Ethoxy, n- und i-Propoxy, n-, i-, s- und t- Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl. Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl. Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂. Unter den Halogenen sind Fluor, Chlor und Brom und insbesondere Chlor bevorzugt.

Silane der allgemeinen Formel IV sind entweder im Handel erhältlich oder lassen sich nach bekannten Methoden herstellen, die z.B. in "Chemie und Technologie der Silicone", W. Noll, Verlag Chemie GmbH, Weinheim/Bergstraße (1968), beschrieben sind.

Ohne Einschränkung der Allgemeinheit sind konkrete Beispiele für Silane der allgemeinen Formel IV:
CH₃-Si-Cl₃, CH₃-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, CH₂=CH-Si-(OOCCH₃)₃, (CH₃)₂-Si-(OC₂H₅)₂, (CH₃)₂SiCl₂, (C₂H₅)₃-Si-Cl, (C₂H₅)₂-Si-(OC₂H₅)₂, (CH₃)₂(CH₂=CH)-Si-Cl₂, (CH₃)₃-Si-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH, (CH₃O)₃-Si-C₃H₆-NH-C₂H₄-NH₂, (CH₃O)₃-Si-C₃H₆-Cl, (CH₃)₂(CH₂=CH-CH₂)-Si-Cl, (CH₃O)₃-Si-C₃H₆-O-C (O)-C(CH₃)=CH₂, (C₂H₅O)₃-Si-C₃H₆-NH₂, (C₂H₅O)₃-Si-C₃H₆-CN,

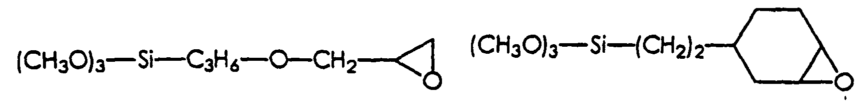

Bei den eingesetzten hydrolysierbaren Aluminium-Verbindungen der allgemeinen Formel II kann hinsichtlich der näheren (bevorzugten) Definitionen der Reste R° auf die Ausführungen im Zusammenhang mit den geeigneten hydrolysierbaren Silicium-Verbindungen verwiesen werden. In diesem Zusammenhang können als konkrete Beispiele genannt werden: Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃, AlCl(OH)₂. Bei Raumtemperatur flüssige Verbindungen, wie z.B. Aluminium-s-butylat und Aluminium-i-propylat, sind besonders bevorzugt. Die eben genannten Aluminium-Verbindungen können auch in komplexierter Form eingesetzt werden.

Weitere hydrolysierbare Verbindungen der allgemeinen Formel II, die zur Herstellung der Polyheterokondensate eingesetzt werden können, sind z.B. Bortrihalogenide und Borsäureester, wie z.B. B(OC₃H₅)₃, BCl₃, B(OCH₃)₃ und B(OC₂H₅)₃.

Unter den hydrolysierbaren Titan- und Zirkonium-Verbindungen der allgemeinen Formel III sind solche bevorzugt, in denen z den Wert 0, 1 oder 3 annimmt. Besonders bevorzugt handelt es sich bei den Verbindungen der eben genannten Formel um solche, in denen y gleich 4 ist. Konkrete Beispiele für einsetzbare Zr- und Ti-Verbindungen sind die folgenden:
TiCl₄, Ti(OC₂H₅)₄, Ti(OC₃H₇)₄, Ti(O-i-C₃H₇)₄, Ti(OC₄H₉)₄, Ti(₂-ethylhexoxy)₄, ZrCl₄. Zr(OC₂H₅)₄, Zr(OC₃H₇)₄, Zr(O-i-C₃H₇)₄, Zr(OC₄H₉)₄, Zr(₂-ethylhexoxy)₄, ZrOCl₂.

Die Silane der allgemeinen Formeln I, I', I", I"', I"" und IV sowie die Verbindungen der allgemeinen Formel III sind über die Reste X hydrolysierbar und polykondensierbar, die Verbindungen der allgemeinen Formel 11 über die Reste R°. Durch die hydrolytische Polykondensation wird ein anorganisches Netzwerk mit -Si-O-Si-, -Si-O-M¹- und -Si-O-M²-Brücken aufgebaut. Die Polykondensation erfolgt vorzugsweise nach dem Sol-Gel-Verfahren, wie es z.B. in den DE-A1 2758414, 2758415, 3011761. 3826715 und 3835968 beschrieben ist. Die Polykondensation wird in der auf diesem Gebiet üblichen Art und Weise durchgeführt, indem man z.B. den zu hydrolysierenden Verbindungen, die entweder als solche oder gelöst in einem Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt. Bei Anwesenheit reaktiver Verbindungen empfiehlt sich in der Regel eine stufenweise Zugabe des Wassers. Unabhängig von der Reaktivität der anwesenden Verbindungen erfolgt die Hydrolyse in der Regel bei Temperaturen zwischen - 20 und 130 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuss an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von Feuchtigkeits beladenen Adsorbentien. z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF. Amide, Ester, insbesondere Essigsäureethylester. Dimethylformamid, Amine, insbesondere Triethylamin, und deren Gemische in Frage.

Die Ausgangsverbindungen müssen nicht notwendigerweise bereits alle zu Beginn der Hydrolyse (Polykondensation) vorhanden sein, sondern es kann sich sogar als vorteilhaft erweisen, wenn nur ein Teil dieser Verbindungen zunächst mit Wasser in Kontakt gebracht wird und später die restlichen Verbindungen zugegeben werden.

Um Ausfällungen während der Hydrolyse und der Polykondensation so weit wie möglich zu vermeiden, kann die Wasserzugabe in mehreren Stufen, z.B, in drei Stufen, durchgeführt werden. Dabei kann in der ersten Stufe z.B. ein Zehntel bis ein Zwanzigstel der zur Hydrolyse benötigten Wassermenge zugegeben werden. Noch kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im Allgemeinen erfolgt die Polykondensation bei Normaldruck, sie kann jedoch auch bei erhöhtem oder bei verringertem Druck durchgeführt werden.

Das so erhaltene Polykondensat kann entweder als solches oder nach teilweiser oder nahezu verständiger Entfernung des verwendeten Lösungsmittels zu den erfindungsgemäßen Hohlfasern verarbeitet werden. In einigen Fällen kann es sich als vorteilhaft erweisen, in dem noch der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur so weit eingedickt werden, dass sie noch problemlos mit einem anderen Lösungsmittel aufgenommen werden kann.

Das auf diese Weise erhaltene Polykondensat stellt eine mehr oder weniger viskose Flüssigkeit oder ein Harz dar, und es wird nach üblichen Methoden zu Hohlfasern verarbeitet. Nach der Formgebung und einer gegebenenfalls erforderlichen Trocknung wird die resultierende Hohlfaser durch Polymerisation und/oder durch Polyaddition, d.h. durch Ausbildung eines organischen Netzwerkes gehärtet.

Silane der Formel I und daraus resultierende Polykondensate können über den Rest R', Silane der Formel I' und daraus resultierende Polykondensate über die bicyclischen Reste, Silane der Formeln I" und I"' sowie deren Polykondensate über die Reste B und Silane der Formeln I"" und V sowie deren Polykondensate über die Mercapto-Gruppen einer Polymerisation und/oder einer Polyaddition unterzogen werden. Durch diese Polymerisations- bzw. Polyadditionsreaktionen wird ein organisches Netzwerk aufgebaut. Das aus den Silanen der Formeln I bis V resultierende Polykondensat bzw. die daraus gefertigte Hohlfaser kann somit durch Polymerisation und/oder durch Polyaddition gehärtet und damit verfestigt werden. Diese Härtungsreaktionen werden thermisch und/oder strahlungsinduziert und/oder chemisch induziert durchgeführt. Nach der Härtung resultiert ein anorganisch-organisches Netzwerk. d.h. die Vorstufen der erfindungsgemäßen Hohlfasern verfügen über ein anorganisch-organisches Netzwerk. Durch Variation des anorganischen und/oder des organischen Netzwerkes, z.B. der Netzwerksdichte, können die chemischen und physikalischen Eigenschaften der erfindungsgemäßen Hohlfasern variiert und das Eigenschaftsprofil der erfindungsgemäßen Hohlfasern kann den Anforderungen des jeweiligen Anwendungsfalles angepasst werden.

Das für die Herstellung der erfindungsgemäßen Hohlfasern eingesetzte Polykondensat kann weitere Zusatzstoffe enthalten. Diese Zusatzstoffe können vor und/oder während und/oder nach der Polykondensation zugegeben werden. Bei diesen Zusatzstoffen handelt es sich z.B. um copolymerisierbare und/oder addierbare und/oder polyaddierbare Monomere und/oder Oligomere. Diese Monomere bzw. Oligomere werden im Zuge der Härtung der resultierenden Hohlfaser über Polymerisations- und/oder (Poly)Additionsreaktionen in das organische Netzwerk der Vorstufen der erfindungsgemäßen Hohlfasern eingebaut. Werden hydrolysierbare Silicium-Verbindungen mit SH- bzw.- C=C- bzw. Amino-Gruppen eingesetzt und werden diese vor der hydrolytischen Polykondensation zugegeben, so werden diese Verbindungen im Zuge der Polykondensation in das anorganische und im Zuge der Polymerisation bzw. (Poly)Addition in das organische Netzwerk der Vorstufen der erfindungsgemäßen Hohlfasern eingebaut.

Weitere Zusatzstoffe, die das für die Herstellung der erfindungsgemäßen Hohlfasern eingesetzte Polykondensat enthalten kann, sind z.B. Härtungskatalysatoren. Diese werden z.B. erforderlich, wenn die resultierende Hohlfaser chemisch, Licht-, UV- oder thermisch induziert gehärtet wird.

Nach der Härtung der Vorstufen der erfindungsgemäßen Hohlfasern werden die organischen Bestandteile durch Pyrolyse entfernt, so dass eine anorganische Hohlfaser resultiert. In bevorzugten Ausführungsformen der erfindungsgemäßen Hohlfasern erfolgt die Entfernung der organischen Bestandteile in einem zwei-stufigen Pyrolyseprozess. Dabei werden die aus dem Polykondensat gefertigten und durch Polymerisation oder Polyaddition gefestigten Hohlfasern zunächst durch thermisches Cracken unter Inertgas in eine noch Kohlenstoff-haltige Zwischenstufe überführt. Geeignete Temperaturen hierfür liegen z.B. zwischen 350 und 650 °C. bevorzugte Temperaturen zwischen 400 und 600 °C. Anschließend erfolgt die Oxidation des Restkohlenstoffes in oxidierender Atmosphäre bei einer Temperatur von beispielsweise zwischen 500 und 600 °C. Hierbei erfährt die Hohlfaser eine lineare Schrumpfung von bis zu 50 %.

Die aus dem Polykondensat pyrolytisch gefertigten anorganischen Hohlfasern sind in der Regel mikroporös. Poren werden üblicherweise in den erfindungsgemäßen Hohlfasern dadurch erzeugt, dass durch thermisches Cracken bzw. durch Oxydation. z.B. durch Ausglühen bei 650 °C, der organische Anteil der Hohlfaser entfernt wird. Dadurch erhält man eine Porenstruktur im Nanometer-Bereich.

Werden größere Poren (Mesoporen) gewünscht, so können dem für die Herstellung der erfindungsgemäßen Hohlfasern eingesetzten Polykondensat Additive zugesetzt werden, die zusätzlich Poren erzeugen und somit den erfindungsgemäßen Hohlfasern eine zusätzliche Porosität verleihen. Derartige Additive sind z.B. flüchtige und/oder lösliche Zusatzstoffe, die nach der Härtung der Hohlfaser und vor der Pyrolyse z.B. durch Temperaturerhöhung und/oder durch Herauslösen entfernt werden, so dass Hohlräume in der Hohlfaser verbleiben. So kann z.B. in den erfindungsgemäßen Hohlfasern dadurch eine Porosität erzeugt werden, dass man Lösungsmittel (z.B. Essigester, Ethanol, Isopropanol, etc.) zum Polykondensat gibt und dieses nach der Härtung der Hohlfaser wieder entfernt. In die Spinnmasse können z.B. bis zu 25 Gew.-% verschiedener Lösungsmittel (z.B. Essigester, Ethanol, Isopropanol, etc.) eingerührt werden, ohne dass deren Spinnbarkeit verloren geht. Nach der Härtung kann das noch in der Hohlfaser enthaltene Lösungsmittel schonend durch Lagerung bei Raumtemperatur oder forciert durch Erwärmung auf ca. 100 °C und Evakuierung quantitativ entfernt werden. Durch Zugabe von Ölen und deren Entfernung nach der Härtung der Hohlfaser werden größere Hohlräume, d.h. größere Poren erzeugt. Lösliche Stoffe, die zugesetzt werden können, sind z.B. Salze.

Es ist aber auch möglich, Poren dadurch zu erzeugen, dass man dem Polykondensat Treibmittel zusetzt, die vor der Härtung der Hohlfaser durch thermische Belastung (z.B. zwischen 150 und 250 °C) Gase freisetzen. Derartige Treibmittel sind z.B. Azo-Verbindungen, wie etwa Azodicarbonamide. Weitere Additive, die zur Porenerzeugung zugesetzt werden können, sind beispielsweise Hydrazin-Derivate (z.B. 4.4-Oxybis(benzolsulfohydrozid), Semicarbazide (z.B. p-Toluylensulfonylsemicarbazid), Tetrazole (z.B. 5-Phenyltetrazol) oder Benzoxazine (z.B. Isatosaureanhydrid).

Die Poren erzeugenden Additive können auch selbst porös sein und verleihen damit der Hohlfaser durch ihre Anwesenheit eine Porosität. Ohne Einschränkung der Allgemeinheit sind derartige poröse Zusatzstoffe z.B. poröse Glaspartikel, Perlite, Zeolithe, Kieselgel oder Kieselgur in kugelförmiger bzw. gemahlener Form.

Nicht-permeable erfindungsgemäße Hohlfasern erhält man dadurch, dass man die Temperatur so weit erhöht, dass die Hohlfaser zu sintern beginnt und sich die Poren an der Oberfläche schließen. Derartige Hohlfasern können für den Stofftransport eingesetzt werden.

Zur Herstellung von Endlos-Hohlfasern werden bevorzugt lösungsmittelfreie Systeme eingesetzt. - lösungsmittelhaltige sind jedoch ebenfalls verarbeitbar, - aus denen wie folgt Hohlfasern gefertigt werden. Zunächst wird das harzförmige Polykondensat, d.h. die Spinnmasse, durch eine ringförmige Düse extrudiert, wobei der Hohlraum durch eine Gas bzw. Flüssigkeit führende Innendüse erzeugt wird. Die Dimension des Harzfadens wird nach üblichen Methoden durch die Variation der Spinnparameter, wie z.B. der Abzugsgeschwindigkeit, der Temperatur, des Drucks, etc., eingestellt. Anschließend wird durch eine ringförmige Vorhärtungskomponente, z.B. eine Strahlungsquelle, unmittelbar unterhalb der Spinndüse der Harzfaden vorvernetzt und damit die Form konserviert. Mittels eines darunter angebrachten Rundstrahlers wird die Endhärtung durchgeführt. Die resultierende Endlosfaser wird aufgewickelt und umgespult. Zur Vorhärtung und/oder zur Endhärtung kann neben einer strahlungsinduzierten Härtung auch eine selbst induzierte oder eine chemisch induziere Härtung durchgeführt werden. Eine Kombination verschiedener Härtungsprinzipien ist ebenfalls möglich.

Die Härtung der Vorstufen der erfindungsgemäßen Hohlfasern kann nach unterschiedlichen Härtungsprinzipien, d.h. thermisch, strahlungs- und/oder chemisch induziert, und nach üblichen Methoden durchgeführt werden. Gegebenenfalls ist die Zugabe von üblichen Härtungskatatysatoren erforderlich. Die Härfungsprinzipien und -methoden sind z.B. in der DE 401 1044 C2, DE 4310733 A1, DE 4405261 A1, DE 4416857 C1, DE 19627198 C2 und der DE 19627220 C2 beschrieben.

Die Herstellung der anorganisch-organischen Vorstufen der erfindungsgemäßen Hohlfaser ist auch im Endlos-Betrieb möglich. Die Pyrolyse derartiger Endlos-Vorstufen zur anorganischen Hohlfaser kann im Batch-Betrieb wie auch im Endlos-Betrieb erfolgen.

Die erfindungsgemäßen anorganischen Hohlfasern zeigen bei hoher mechanischer Stabilität hohe Permeationswerte und hohe Selektivität.

Die erfindungsgemäßen Hohlfasern stellen sowohl binäre Systeme aus SiO₂/Al₂O₃, SiO₂/B₂O₃, SiO₂/TiO₂ oder SiO₂/ZrO₂ dar, als auch ternäre Systeme aus SiO₂/Al₂O₃/B₂O₃, SiO₂/Al₂O₃/TiO₂, SiO₂/Al₂O₃/ZrO₂, SiO₂/B₂O₃/TiO₂. SiO₂/B₂O₃/ZrO₂ oder SiO₂/TiO₂/ZrO₂. Quaternäre Systeme wie z.B. SiO₂/Al₂O₃/B₂O₃/TiO₂, SiO₂/Al₂O₃/B₂O₃/ZrO₂ oder SiO₂/Al₂O₃/TiO₂/ZrO₂ sind ebenfalls möglich.

Der Anteil der einzelnen Oxide in den erfindungsgemäßen Membranen kann in weiten Bereichen variiert werden und ist problemlos durch die Menge der eingesetzten hydrolysierbaren Verbindungen steuerbar. Der Anteil an SiO₂ in den erfindungsgemäßen Hohlfasern kann zwischen 1 und 99 Gew.-% liegen, der Anteil an Al₂O₃ zwischen 0 und 99 Gew.-%, an B₂O₃ zwischen 0 und 40 Gew.-%, an TiO₂ zwischen 0 und 50 Gew.-% und an ZrO₂ zwischen 0 und 99 Gew.-%.

Durch den Einbau von B₂O₃ in die erfindungsgemäßen Hohlfasern wird, im Vergleich zu reinen SiO₂-Hohlfasern, die chemische Beständigkeit gegenüber sauren und basischen Flüssigkeiten erhöht. Ferner wird die Temperaturstabilität und die mechanische Festigkeit gesteigert und die thermische Dehnung a verringert.

Durch den Einbau von ZrO₂ in die erfindungsgemäßen Hohlfasern wird die hydrolytische Beständigkeit und durch den Einbau von Al₂O₃ die thermische und die chemische Beständigkeit gegenüber reinen SiO₂-Hohlfasern entscheidend verbessert.

Zur Einführung weiterer Heteroatome in die erfindungsgemäßen Hohlfasern werden für die Herstellung der Spinnmasse cokondensierbare und/oder copolymerisierbare Verbindungen der Elemente Li, Na, Mg, Ca, Sr, Ba, Zn, Sn und Pb eingesetzt, die dann im Rahmen der hydrolytischen Kondensation in das anorganische Netzwerk eingebaut werden. Eine weitere Alternative zum Einbau von Heteroatomen ist die Zugabe vom im Reaktionsmedium löslichen Verbindungen der Elemente Li, Na, Mg, Ca, Sr, Ba, Zn, Sn und Pb. Diese Zugabe kann vor, während oder nach der hydrolytischen Polykondensation erfolgen.

Ohne Einschränkung der Allgemeinheit sind derartige geeignete Verbindungen Lithium(meth)acrylat, Lithium-t-butoxid, Lithiummethoxid, Lithiumethoxid, Natrium(meth)acrylat, Natriumethoxid, Magnesium(meth)acrylat, Magnesiummethoxid, Magnesiumethoxid, Magnesium-n-propoxid, Calciumethoxid, Calcium-(meth)acrylat, Strontium-i-propoxid, Strontiummethoxid, Strontiummethoxypropoxid, Barium-i-propoxid, Zink-II-(meth)acrylat, Zink-N,N-dimethylaminoethoxid. Zinn-IV-t-butoxid, Zinn-II-ethoxid, Blei-II-(meth)acrylat und Blei-IV-propionat.

Diese Verbindungen können in solchen Mengen zugegeben werden, dass in der resultierenden anorganischen Hohlfaser der Anteil an LiO₂, und NaO₂ jeweils zwischen 0 und 10 Gew.-% liegt und an MgO, CaO, SrO, BaO, ZnO, SnO und PbO jeweils zwischen 0 und 20 Gew.-%.

Durch den Einbau von LiO₂ in die erfindungsgemäßen Hohlfasern wird, verglichen mit reinen SiO₂-Hohlfasern, die thermische Dehnung α verringert und die elektrische Leitfähigkeit bei 350°C erhöht. Derartige Hohlfasern zeigen eine Erhöhung des Brechungsindex n.

Der Einbau von Na₂O bewirkt eine Erhöhung der thermischen Dehnung α, und der Einbau von MgO führt zu einer Erhöhung der Dielektrizitätskonstante ε sowie zu einer Verringerung der thermischen Dehnung α. Durch den Einbau von CaO und SrO wird die thermische Dehnung α, die Brechzahl n und die mechanische Festigkeit der Hohlfasern erhöht. Der Einbau von BaO bewirkt eine Erhöhung der mechanischen Festigkeit, ZnO eine Erhöhung der Brechzahl n, SnO eine Erhöhung der Brechzahl n und der Röntgenabsorption und PbO eine Erhöhung der Brechzahl n, der thermischen Dehnung α und der Röntgenabsorption.

Die erfindungsgemäßen Hohlfasern können für den Stofftransport und für die verschiedensten Trennverfahren eingesetzt werden, insbesondere für die Gasseparation, für die Dialyse, für die Pervaporation, sowie für die Mikro-, Ultra- und Hyperfiltration.

Anhand von Ausführungsbeispielen wird die Herstellung der erfindungsgemäßen Hohlfasern näher erläutert.

### Beispiel 1:

### Anorganische Hohlfaser für die Gastrennung

### Edukte:

| **A** | |
|---|---|
| Glycerin-1,3-dimethacrylat | 0.1 Mol |
| Dibutylzinndilaurat | 0.001 Mol |
| 3-Isocyanotopropyltriethoxysilan | 0.1 Mol |
| H₂O / Mol Silan | 2.4 Mol |
| NH₄F / Mol Silan | 0.01 Mol |

| **B** | |
|---|---|
| Zirkoniumpropylat (79.8 %) | 0.04 Mol |
| Acetessigsäure [2(methacrylolyloxy)ethylester] (AEME) | 0.04 Mol |
| Methacrylsäure | 0.04 Mol |
| H₂O / Mol Silan | 2.4 Mol |
| NH₄F / Mol Zirkoniumpropylat | 0.01 Mol |

### Synthese:

### A

Zur Vorlage von 22.8 g (0.1 Mol) Glycerin-1,3-dimethacrylat und 0.63 g (0.001 Mol) Dibutylzinndilaurat (als Additionskatalysator) werden unter Kühlung und Schutzgasatmosphäre 24.7 g (0.1 Mol) 3-Isocyanatopropyltriethoxysilan zugetropft. Nach 24 h Rühren werden 100 ml Essigester zugegeben.

### B

Zur Vorlage von 8.57 g (0.04 Mol) AEME werden unter Kühlung und Schutzgasatmosphäre 16.4 g (0.04) Zirkoniumpropylat (79.8%) zugetropft. Nach 30 Minuten Rühren im Eisbad werden 3.44 g (0.04 Mol) Methacrylsäure zugetropft.
Nach 30 Minuten Rühren wird bei 25 °C B langsam zu A getropft und gleich anschließend die Hydrolyse gestartet. Nach 6 Tagen wird der Ansatz aufgearbeitet, mit Wasser ausgeschüttelt, filtriert, einrotiert und die flüchtigen Bestandteile an der Ölpumpe vollständig entfernt.
Feststoffgehalt: 93.3 %,
Viskosität nach 25 Tagen: 104 Pas (25 °C).

### Hohlfaserherstellung:

Das mit einem Photoinitiator (z.B. 2 % Irgacure 184, Fa. Ciba Geigy) versetzte Harz (Viskosität bei Verarbeitungstemperatur (15°C) ca. 400 Pas) wird durch eine ringförmige Düse extrudiert (Außendurchmesser ca. 1 mm Ringstärke ca. 0.2 mm). Durch eine N₂-gespülte zweite, cozentrische Innendüse wird die Hohlfaden-Geometrie zunächst stabilisiert, bis durch eine Kombination zweier UV-Strahlungseinheiten (z.B. Blue-Point II, Fa. Hönle mit einem Rundstrahler F300, Firma Fusion) die organische Aushärtung erfolgt.

| | | |
|---|---|---|
| Spinnparameter: | Spinntemperatur: | 15 °C |
| | Spinndruck: | 18 bar |
| | Abzugsgeschwindigkeit: | 0.3 m/s |

Anschließend wird die Hohlfaser aufgespult. Durch Variation der Spinnparameter (Spinnmassentemperatur, Druck, Abzugsgeschwindigkeit, Gas-Durchflussrate durch den Innenkanal) lässt sich die Fasergeometrie in weiten Bereich variieren. Im vorliegenden Fall war die im Dauerbetrieb erzielte Geometrie der Hohlfaser bei ca. 250 µm Außendurchmesser und 33 µm Wandstärke.

### Pyrolyse:

Durch Pyrolyse werden die organischen Bestandteile entfernt und es resultiert eine anorganische Hohlfaser mit folgenden Eigenschaften.

### Eigenschaften der anorganischen Hohlfaser:

Durchmesser: 105 µm,
Wandstärke: 22 µm,
Zugfestigkeit: 160 MPa,
Elastizitätsmodul: ca. 19 GPa
gute Handhabbarkeit,
hohe Druckstabilität bis 300 bar
geringe Porengröße im Bereich von 1.4 bis 2.0 nm,
relativ enge Porenverteilung
große innere Oberfläche: 230 m²/g.
Trennung von Molekülen in wässrigen Medien im Bereich von 1 bis 6 nm möglich.

### Biespiel 2:

### SiO₂ : Al₂O₃ = 70 Gew.% : 30 Gew.%

### Edukte:

| **A** | |
|---|---|
| Gycerin-1.3-dimethacrylat | 0.0416 Mol |
| Dibutylzinndilaurat | 0.000416 Mol |
| 3-isocyanatopropyltriethoxysilan | 0.0416 Mol |
| H₂O / Mol Silan | 1.5 Mol |

| **B** | |
|---|---|
| Aluminium-sec.-butylat | 0.0166 Mol |
| Methacrylsäure | 0.0456 Mol |

### Synthese:

### A

Zur Vorlage von 9.51 g (0.0416 Mol) Glycerin-1.3-dimethacrylat und 0.262 g (0.000416 Mol) Dibutylzinndilaurat (als Additionskatalysator) werden unter Kühlung und Schutzgasatmosphäre 10.31 g (0.0416 Mol) 3-Isocyanatopropyltriethoxysilan zugetropft. Nach 24 h Rühren werden 41.6 g Toluol zugegeben. Die Hydrolyse wird bei 30 °C gestartet.

### B

Zur Vorlage von 4.15 g (0.0166 Mol) Aluminium-sec.-butylat und 1.68 g Toluol werden unter Schutzgasatmosphäre 1.08 g (0.0456 Mol) Methacrylsäure zugegeben.
Nach 24 h Rühren bei 30°C wird B langsam zu A gegeben. Nach 6 Tage Rühren werden die flüchtigen Bestandteile an der Ölpumpe vollständig entfernt.
Festststoffagehalt: 94.5 %
Viskosität (nach 6 Tagen): 245 Pas (25 °C). 46 Pas (40°C)

### Beispiel 3:

### SiO₂: Al₂O₃ = 90 Gew.% : 10 Gew.%

### Edukte:

| **A** | |
|---|---|
| Gycerin-1,3-dimethacrylat | 0.125 Mol |
| Dibutylzinndilaurat | 0.00125 Mol |
| 3-Isocyanatopropyltriethoxysilon | 0.125 Mol |
| H₂O / Mol Silan | 1.5 Mol |

| **B** | |
|---|---|
| Aluminium-sec.-butylat | 0.0133 Mol |
| Methacrylsäure | 0.0100 Mol |

### Synthese:

### A

Zur Vorlage von 28.57 g (0.125 Mol) Glycerin-1.3-dimethacrylat und 0.788 g (0.00125 Mol) Dibutylzinndilaurat (als Additionskatalysator) werden unter Kühlung und Schutzgasatmosphäre 30.97 g (0.125 Mol) 3-Isocyanatopropyltriethoxysilon zugetropft. Nach 24 h Rühren werden 120.9 g Toluol zugegeben. Die Hydrolyse wird bei 30 °C gestartet.

### B

Zur Vorlage von 3.27 g (0.0133 Mol) Aluminium-sec.-butylat und 4.05 g Toluol werden unter Schutzgasatmosphäre 0.86 g (0.0100 Mol) Methacrylsäure zugegeben.
Nach 24 h Rühren bei 30°C wird B langsam zu A gegeben. Nach 6 Tagen werden die flüchtigen Bestandteile an der Ölpumpe vollständig entfernt.
Festststoffgehalt: 96.6 %
Viskosität (nach 6 Tagen): 209 Pos (25 °C), 35 Pas (40°C)

### Beispiel 4:

### SiO₂ : TiO₂ = 70 Gew.%: 30 Gew.%

### Edukte:

| **A** | |
|---|---|
| Gycerin-1.3-dimethacrylat | 0.171 Mol |
| Dibutylzinndilaurat | 0.00171 Mol |
| 3-Isocyanatopropyltriethoxysilan | 0.171 Mol |

| **B** | |
|---|---|
| Titanpropylat | 0.054 Mol |
| Methacrylsäure | 0.081 Mol |
| H₂O / Mol Silan | 1.5 Mol |
| NH₄F | 0.01 Mol |

### Synthese:

### A

Zur Vorlage von 39.09 g (0.171 Mol) Glycerin-1.3-dimethacrylat und 1.078 g (0.00171 Mol) Dibutylzinndilaurat (als Additionskatalysator) werden unter Kühlung und Schutzgasatmosphäre 42.37 g (0.171 Mol) 3-Isocyanatopropyltriethoxysilan zugegeben und 24 h gerührt.

### B

Zur Vorlage von 15.38 g (0.054 Mol) Titanpropylat und 6.97 g Essigester werden unter Schutzgasatmosphäre und Eisbadkühlung 6.97 g (0.081 Mol) Methacrylsäure zugegeben.
Nach 1 h Rühren wird B langsam zu A gegeben und es werden 164 g Essigester zugeben. Das in Wasser gelöste NH₄F wird extrem langsam innerhalb 1 h zugetropft und damit die Hydrolyse gestartet. Nach 6 Tagen werden die flüchtigen Bestandteile an der Ölpumpe vollständig entfernt.
Festststoffgehalt: 92.5 %
Viskosität (nach 6 Tagen): 850 Pas (25 °C), 136 Pas (40°C)

## Patentansprüche

1. Verfahren zur Herstellung von anorganischen Hohlfasern mit Poren im Nanometer- und/oder Subnanometerbereich, **dadurch gekennzeichnet, dass** man eine Spinnmasse nach üblichen Methoden zu einer Hohlfaser verarbeitet, dass man die Hohlfaser gegebenenfalls trocknet, dass man die gegebenenfalls getrocknete Hohlfaser thermisch und/oder strahlungsinduziert und/oder chemisch induziert durch Polymerisation und/oder durch Polyaddition härtet, und dass man aus der gehärteten Hohlfaser durch Pyrolyse die organischen Bestandteile entfernt, wobei die Spinnmasse erhalten wird
a) durch hydrolytische Polykondensation von
■ einer oder mehreren Verbindungen der allgemeinen Formel I und/oder von diesen abgeleiteten Vorkondensaten,
SiXₐR'_{b}R_{(4-a-b)} (I)
in der die Reste und Indices folgende Bedeutung haben:
R = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R' = organischer Rest mit 1 bis 50 Kohlenstoff-Atomen und mit mindestens einer polymerisierbaren oder polyaddierbaren Gruppe
X = Wasserstoff, Halogen, Hydroxy, Alkoxy, Acyloxy, Alkylcarbonyl, Alkoxycarbonyl oder NR"₂, mit R" = Wasserstoff, Alkyl oder Aryl,
a = 1, 2 oder 3.
b = 1, 2 oder 3, mit a+b = 2, 3 oder 4,
■ und einer oder mehreren, gegebenenfalls komplexierten Verbindungen der allgemeinen Formeln II und/oder III und/oder von diesen abgeleiteten Vorkondensaten,
M¹R°₃ (II)
M²X_{Y}R_{Z} (III)
wobei M¹ Aluminium oder Bor und M² Titan oder Zirkonium bedeutet, die Reste X, R° und R gleich oder verschieden sind, R° Halogen, Hydroxy, Alkoxy oder Acyloxy darstellt, y eine ganze Zahl von 1 bis 4 ist, z für 0 1, 2, oder 3 mit y+z=4 steht, und X und R wie im Falle der allgemeinen Formel I definiert sind,
und gegebenenfalls
■ von einer oder mehreren Verbindungen der allgemeinen Formel IV und/oder von diesen abgeleiteten Vorkondensaten,
XₐSiR₄₋ₐ (IV)
in der die Reste und Indices folgende Bedeutung haben:
R = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
X = Wasserstoff, Halogen, Hydroxy, Alkoxy, Acyloxy, Alkylcarbonyl, Alkoxycarbonyl oder NR"₂,
mit R" = Wasserstoff, Alkyl, Aryl oder Alkylaryl,
a = 1, 2 oder 3,
und/oder
■ von einer oder mehreren cokondensierbaren Verbindungen der Elemente Li, Na, Mg, Ca, Sr, Ba, Zn, Sn oder Pb,
wobei die hydrolytische Polykondensation durch Zugabe von Wasser oder Feuchtigkeit und gegebenenfalls in Anwesenheit eines Lösungsmittels und/oder eines Kondensationskatalysators durchgeführt wird, und wobei, bezogen auf die Monomeren, das molare Verhältnis der Verbindung der Formel I zur Summe der Verbindungen der Formeln II und III zwischen 99:1 und 1 :99 liegt,
und gegebenenfalls
b) durch Zugabe
■ von einem oder mehreren copolymerisierbaren und/oder (poly)addierbaren Monomeren und/oder Oligomeren,
■ und/oder von einem oder mehreren Härtungskatalysatoren,
■ und/oder von einem oder mehreren Poren erzeugenden Additiven,
■ und/oder von einer oder mehreren im Reaktionsmedium löslichen Verbindungen der Elemente Li, Na, Mg, Ca, Sr, Ba, Zn, Sn und Pb.

2. Verfahren nach Anspruch 1, **dadurch gekennzeichnet, dass** die aus dem Polykondensat gefertigte und durch Polymerisation und/oder durch Polyaddition gefestigte Hohlfaser durch thermisches Cracken zunächst in eine Kohlenstoff-haltige Zwischenstufe übergeführt wird, und dass anschließend aus dieser Kohlenstoffhaltigen Zwischenstufe in oxidierender Atmosphäre der Restkohlenstoff entfernt wird.

3. Verfahren nach Anspruch 2, **dadurch gekennzeichnet, dass** das thermische Cracken bei 350 bis 650 °C und/oder das Entfernen des Restkohlenstoffs bei 500 bis 600°C erfolgt.

4. Verfahren nach einem der voranstehenden Ansprüche, **dadurch gekennzeichnet, dass** man als Verbindungen der allgemeinen Formel I Verbindungen der allgemeinen Formel I' und/oder von diesen abgeleitete Vorkondensate einsetzt, 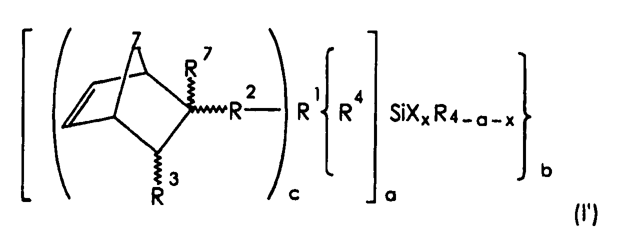 in der die Reste und Indices folgende Bedeutung haben:
R = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R¹ = Alkylen, Arylen, Arylenalkylen oder Arylenalkylen mit jeweils 0 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R² = Alkylen, Arylen, Arylenalkylen oder Arylenalkylen mit jeweils 0 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R³ = Wasserstoff, R²-R¹-R⁴-SiXₓR₃₋ₓ, Carboxyl-, Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R⁴ = -(CHR⁶-CHR⁶)ₙ-, mit n = 0 oder 1, -CHR⁶-CHR⁶-S-R⁵-, -CO-S-RS-, -CHR⁶-CHR⁶-NR⁶-R⁵-, -Y-CS-NH-R⁵-, -S-R⁵,-Y-CO-NH-R⁵-, -CO-O-R⁵-, -Y-CO-C₂H₃(COOH)-R⁵-, -Y-CO-C₂H₃(OH)-R⁵- oder -CO-NR⁶-R⁵-,
R⁵ = Alkylen, Arylen, Arylenalkylen oder Arylenalkylen mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R⁶ = Wasserstoff, Alkyl oder Aryl mit 1 bis 10 Kohlenstoff-Atomen,
R⁷ = Wasserstoff, Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
X = Wasserstoff, Halogen, Hydroxy, Alkoxy, Acyloxy, Alkylcarbonyl, Alkoxycarbonyl oder NR"₂,
mit R" = Wasserstoff, Alkyl oder Aryl,
Y = -O-, -S- oder -NR⁶-,
Z = -O- oder -(CHR⁶)ₘ₋, mit m = 1 oder 2,
a = 1, 2 oder 3, mit b = 1 für a = 2 oder 3,
b = 1, 2 oder 3, mit a = 1 für b = 2 oder 3,
c = 1 bis 6,
x = 1, 2 oder 3, mit a+x = 2, 3 oder 4.

5. Verfahren nach einem der Ansprüche 1 bis 3, **dadurch gekennzeichnet, dass** man als Verbindungen der allgemeinen Formel I Verbindungen der allgemeinen Formel I" und/ oder von diesen abgeleitete Vorkondensate einsetzt, 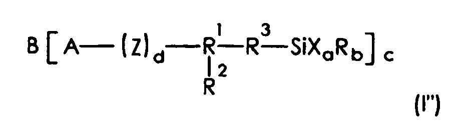 in der die Reste und Indices folgende Bedeutung haben:
B = ein geradkettiger oder verzweigter organischer Rest mit mindestens einer C=C-Doppelbindung und 4 bis 50 Kohlenstoff-Atomen,
R = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
R³ = Alkylen, Arylen, Arylenalkylen oder Alkylenarylen mit jeweils 0 bis 10 Kohlenstoff-Atomen, wobei diese Reste durch Sauerstoff- und/oder durch Schwefel-Atome und/oder durch Amino-Gruppen unterbrochen sein können,
X = Wasserstoff, Halogen, Hydroxy, Alkoxy, Acyloxy, Alkylcarbonyl, Alkoxycarbonyl oder NR"₂,
mit R"= Wasserstoff, Alkyl, Aryl oder Alkylaryl,
A = O, S oder NH
für d = 1 und Z = CO und
R¹ = Alkylen, Arylen oder Alkylenarylen mit jeweils 1 bis 10 Kohlenstoff-Atomen, wobei diese Reste durch Sauerstoff- und/oder durch Schwefel-Atome und/oder durch Amino-Gruppen unterbrochen sein können, und
R² = COOH oder H,
oder
A = O, S, NH oder COO
für d = 1 und Z = CHR', mit R' = H, Alkyl, Aryl oder Alkylaryl, und
R¹ = Alkylen, Arylen oder Alkylenarylen mit jeweils 1 bis 10 Kohlenstoff-Atomen, wobei diese Reste durch Sauerstoff- und/oder durch Schwefel-Atome und/oder durch Amino-Gruppen unterbrochen sein können, und
R² = OH,
oder
A = O, S, NH oder COO
für d = 0 und
R¹ = Alkylen, Arylen oder Alkylenarylen mit jeweils 1 bis 10 Kohlenstoff-Atomen, wobei diese Reste durch Sauerstoff- und/oder durch Schwefel-Atome und/oder durch Amino-Gruppen unterbrochen sein können, und
R² = OH.
oder
A = S
für d = 1 und Z = CO und
R¹ = N und
R² = H,
a = 1, 2 oder 3,
b = 0, 1 oder 2, mit a+b = 3,
c = 1, 2, 3 oder 4.

6. Verfahren nach einem der Ansprüche 1 bis 3, **dadurch gekennzeichnet, dass** man als Verbindungen der allgemeinen Formel Verbindungen der allgemeinen Formel I"' und/oder von diesen abgeleitete Vorkondensate einsetzt,
{XₐR_{b}Si[(R'A)_{c}]_{(4-a-b)}}ₓB (I"')
in der die Reste und Indices folgende Bedeutung haben:
A = O, S, PR", POR", NHC(O)O oder NHC(O)NR",
B = geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoff-Atomen ableitet,
R = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome, und/oder Ester- und/oder Carbonyl- und/oder Carboxyl- und/oder Amid- und/oder Amino-Gruppen enthalten können,
R' = Alkylen, Arylen oder Alkylenarylen,
R" = Wasserstoff, Alkyl, Aryl oder Alkylaryl,
X = Wasserstoff, Halogen, Hydroxy, Alkoxy, Acyloxy, Alkylcarbonyl, Alkoxycarbonyl oder NR"₂,
a = 1, 2 oder 3,
b = 0, 1 oder 2,
c = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht,
wobei die obigen Alkyl- bzw. Alkenyl-Reste gegebenenfalls substituierte geradkettige, verzweigte oder cyclische Reste mit 1 bzw. 2 bis 20 Kohlenstoff-Atomen sind, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-. Arylen-, Alkylen- und Alkylenaryl-Reste von den oben definierten Alkyl- und Aryl-Resten ableiten.

7. Verfahren nach einem der Ansprüche 1 bis 3, **dadurch gekennzeichnet, dass** man als Verbindungen der allgemeinen Formel I Verbindungen der allgemeinen Formel I"" und/oder von diesen abgeleitete Vorkondensate einsetzt,
YₐSiXₓR₄₋ₐ₋ₓ (I"")
in der die Reste und Indices folgende Bedeutung haben:
R = Alkyl, Alkenyl, Aryl, Alkylaryl oder Arylalkyl mit jeweils 1 bis 20 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können,
X = Wasserstoff, Halogen, Hydroxy, Alkoxy, Acyloxy, Alkylcarbonyl, Alkoxycarbonyl oder NR"₂,
mit R" = Wasserstoff, Alkyl, Aryl oder Alkylaryl.
Y = organischer Rest mit 1 bis 30, bevorzugt mit 1 bis 20 Kohlenstoff-Atomen, und mit 1 bis 5, bevorzugt mit 1 bis 4 Mercapto-Gruppen,
a = 1, 2 oder 3,
x = 1, 2 oder 3, mit a+x = 2, 3 oder 4.

8. Verfahren nach Anspruch 7, **dadurch gekennzeichnet, dass** als Silane der allgemeinen Formel I"" Silane der allgemeinen Formel V
[(HS-R⁵)ₙR⁶-S-E-R⁵)ₐSiXₓR₄₋ₐ₋ₓ (V)
eingesetzt werden, in der die Reste und Indices folgende Bedeutung haben:
E = CO-NH-, -CS-NH-, -CH₂-CH₂-oder-CH₂-CH(OH)-
R = wie im Falle der allgemeinen Formel IV definiert;
R⁵ = Alkylen, Arylen, Arylenalkylen oder Arylenalkylen mit jeweils 1 bis 20 Kohlenstoff-Atomen, wobei diese Reste durch Sauerstoff- und/oder durch Schwefel-Atome und/oder durch Ester- und/oder durch Carbonyl- und/oder durch Carboxyl- und/oder durch Amid- und/oder durch Amino-Gruppen unterbrochen sein können;
R⁶ = Alkylen, Arylen, Arylenalkylen oder Arylenalkylen mit jeweils 1 bis 20 Kohlenstoff-Atomen, wobei diese Reste durch Sauerstoff- und/oder durch Schwefel-Atome und/oder durch Ester- und/oder durch Carbonyl- und/oder durch Carboxyl- und/oder durch Amid- und/oder durch Amino-Gruppen unterbrochen sein können;
X = wie im Falle der allgemeinen Formel IV definiert;
a = wie im Falle der allgemeinen Formel IV definiert;
n = 2, 3, 4 oder 5;
x = wie im Falle der allgemeinen Formel IV definiert.

9. Verfahren nach einem oder mehreren der Ansprüche 1 bis 8, **dadurch gekennzeichnet, dass** man eine Spinnmasse einsetzt, die eine oder mehrere organische Ver-bindungen mit einer oder mehreren Mercapto-Gruppen enthält.

10. Verfahren nach einem oder mehreren der Ansprüche 1 bis 9, **dadurch gekennzeichnet, dass** man eine Spinnmasse einsetzt, die eine oder mehrere organische Verbindungen mit einer oder mehreren substituierten und/oder unsubstituierten Amino-Gruppen enthält.

11. Verfahren nach einem oder mehreren der Ansprüche 1 bis 10, **dadurch gekennzeichnet, dass** man eine Spinnmasse einsetzt, die als Poren erzeugende Additive eines oder mehrere Salze und/oder eine oder mehrere Flüssigkeiten und/oder eines oder mehrere Treibmittel und/oder einen oder mehrere poröse Füllstoffe enthält.

12. Verfahren nach einem oder mehreren der Ansprüche 1 bis 11, **dadurch gekennzeichnet, dass** man nach der Härtung die Poren erzeugenden Additive herauslöst und/ oder durch thermische Behandlung entfernt.

13. Anorganische Hohlfaser mit Poren im Nanometer- und/oder Subnanometerbereich, erhalten nach dem Herstellungsverfahren wie in einem der Ansprüche 1 bis 12 definiert.

14. Anorganische Hohlfaser nach Anspruch 13 mit 1 bis 99 Gew.-% SiO₂ und 0 bis 99 Gew.-% Al₂O₃ und/oder 0 bis 40 Gew.-% B₂O₃ und/oder 0 bis 50 Gew.-% TiO₂ und/oder 0 bis 99 Gew.-% ZrO₂.

15. Anorganische Hohlfaser nach Anspruch 14, **gekennzeichnet durch** 0 bis 10 Gew.-% LiO₂ und/oder 0 bis 10 Gew.-% Na₂O und/oder 0 bis 20 Gew.-% MgO und/oder 0 bis 20 Gew.-% CaO und/oder 0 bis 20 Gew.-% SrO und/oder 0 bis 20 Gew.-% BaO und/oder 0 bis 20 Gew.-% ZnO und/oder 0 bis 20 Gew.-% SnO und/oder 0 bis 20 Gew.-% PbO.

16. Verwendung der Hohlfaser nach einem oder Ansprüche 13 bis 15 in Trennverfahren und für den Gasaustausch.

## Claims

1. Method for the preparation of inorganic hollow fibers comprising pores in the nanometer or subnanometer range, **characterized in that** a spinning mass is processed to a hollow fiber according to general methods, **in that** the hollow fiber is optionally dried, **in that** the optionally dried hollow fiber is cured thermally and/or via radiation induction and/or via chemical induction by polymerization and/or by polyaddition, and **in that** the organic components are removed from the cured hollow fiber via pyrolysis, wherein the spinning mass is obtained by
a) by hydrolytic polycondensation of
• one or more compounds of the general formula I and/or of precondensates derived therefrom,
SiXₐR'_{b}R(_{4-a-b}) (I)
wherein the radicals and indices have the following meaning:
R = alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
R' = organic radical having from 1 to 50 carbon atoms and containing at least one group which can undergo a polymerization or a polyaddition
X = hydrogen, halogen, hydroxy, alkoxy, acyloxy, alkylcarbonyl, alkoxycarbonyl or NR"₂, wherein R" = hydrogen, alkyl or aryl,
a = 1, 2 or 3,
b = 1, 2 or 3, with the proviso that a+b = 2, 3 or 4,
• and one or more compounds of the general formulae II and/or III which is/are optionally in the form of (a) complex(es) and/or of precondensates derived thereof,
M¹R°₃ (II)
²X_{y}R_{z} (III)
wherein M¹ is aluminum or boron and M² is titanium or zirconium, the radicals X, R° and R are equal or different, R° is halogen, hydroxy, alkoxy or acyloxy, y is an integer of from 1 to 4, z is 0, 1, 2, or 3 under the proviso that y+z=4, and X and R are defined as in formula I,
and optionally
• one or more compounds of the general formula IV and/or of precondensates derived therefrom,
XₐSiR₄₋ₐ (IV)
wherein the radicals and indices have the following meaning:
R = alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
X = hydrogen, halogen, hydroxy, alkoxy, acyloxy, alkylcarbonyl, alkoxycarbonyl or NR"₂,
wherein R" = hydrogen, alkyl, aryl or alkylaryl,
a = 1, 2 or 3,
and/or
• one or more co-condensable compounds of the elements Li, Na, Mg, Ca, Sr, Ba, Zn, Sn or Pb,
wherein the hydrolytic polycondensation is carried out by adding water or moisture and, optionally, in the presence of a solvent and/or a condensation catalyst and wherein the molar ratio of the compound of formula I to the sum of compounds of formulae II and III is between 99:1 and 1:99, based on the monomers,
and, if desired
b) by addition of
■ one or more monomers and/or oligomers which are co-polymerizable and/or can be subjected to a (poly)addition,
■ and/or one or more curing catalysts,
■ and/or one or more pore generating additives,
■ and/or one or more compounds of the elements Li, Na, Mg, Ca, Sr, Ba, Zn, Sn and Pb which are soluble in the reaction medium.

2. Method according to claim 1, **characterized in that** the hollow fiber which has been made from the polycondensate and has been strengthened by polymerization and/or polyaddition is first converted into a carbon-containing intermediate by way of thermal cracking and that subsequently, the remaining carbon is removed from said carbon-containing intermediate in an oxidizing atmosphere.

3. Method according to claim 2, **characterized in that** thermal cracking is performed at 305°C to 650°C and/or that removal of the remaining carbon is at 500°C to 600°C.

4. Method according to any of the preceding claims, **characterized in that** as the compounds of general formula I, compounds of general formula I' and/or of precondensates derived thereof are used, 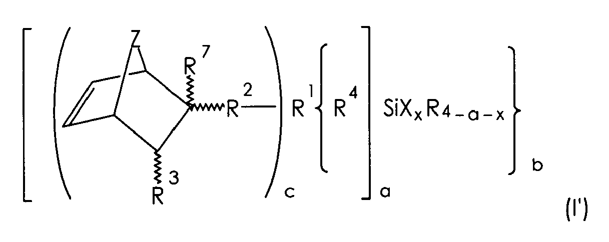 wherein the radicals and indices have the following meaning:
R = alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
R¹ = alkylene, arylene, arylenealkylene or arylenealkylene having from 0 to 20 carbon atoms each, wherein said radicals may contain oxygen atoms and/or sulfur atoms and/or ester and/or carbonyl and/or carboxy and/or amide and/or amino groups,
R² = alkylene, arylene, arylenealkylene or arylenealkylene having from 0 to 20 carbon atoms each, wherein said radicals may contain oxygen and/or sulfur atoms and/or ester and/or carbonyl and/or carboxy and/or amide and/or amino groups,
R³ = hydrogen, R²-R¹-R⁴-SiXₓR₃₋ₓ, carboxyl, alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
R⁴ = -(CHR⁶-CHR⁶)ₙ-, wherein n is 0 or 1, -CHR⁶-CHR⁶-S-R⁵-, -CO-S-R⁵-, -CHR⁶-CHR⁶-NR⁶-R⁵-, -Y-CS-NH-R⁵-, -S-R⁵-, -Y-CO-NH-R⁵-, -CO-O-R⁵-, -Y-CO-C₂H₃(COOH)-R⁵-, -Y-CO-C₂H₃(OH)-R⁵- or -CO-NR⁶-R⁵-,
R⁵ = alkylene, arylene, arylenealkylene or arylenealkylene having from 1 to 20 carbon atoms each, wherein said radicals may contain oxygen atoms and/or sulfur atoms and/or ester and/or carbonyl and/or carboxy and/or amide and/or amino groups,
R⁶ = hydrogen, alkyl or aryl having from 1 to 10 carbon atoms,
R⁷ = hydrogen, alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
X = hydrogen, halogen, hydroxy, alkoxy, acyloxy, alkylcarbonyl, alkoxycarbonyl or NR"₂,
wherein R" is hydrogen, alkyl, alkylaryl or aryl,
Y = -O-, -S- or -NR⁶-,
Z = -O- or -(CHR⁶)ₘ-, wherein m = 1 or 2,
a = 1, 2 or 3, wherein b = 1 in case a = 2 or 3,
b = 1, 2 or 3, wherein a = 1 in case b = 2 or 3,
c = 1 to 6,
x = 1, 2 or 3, wherein a+x = 2, 3 or 4.

5. Method according to any of claims 1 to 3, **characterized in that** as the compounds of general formula I. compounds of general formula I" and/or of precondensates derived thereof are used, 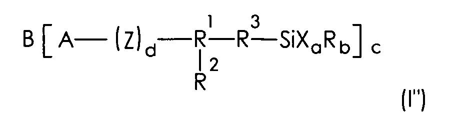 wherein the radicals and indices have the following meaning:
B = a straight-chain or branched organic radical having at least one C=C double bond and from 4 to 50 carbon atoms,
R = alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
R³ = alkylene, arylene, arylenealkylene or alkylenearylene having from 0 to 10 carbon atoms each, wherein the said radicals may be interrupted by oxygen atoms and/or by sulfur atoms and/or by amino groups,
X = hydrogen, halogen, hydroxy, alkoxy, acyloxy, alkylcarbonyl, alkoxycarbonyl or NR"₂,
wherein R" is hydrogen, alkyl, aryl or alkylaryl.
A = O, S or NH
in case d = 1 and Z = CO and
R¹ = alkylene, arylene, or alkylenearylene having from 1 to 10 carbon atoms each, wherein the said radicals may be interrupted by oxygen atoms and/or by sulfur atoms and/or by amino groups, and
R² = COOH or H,
or
A = O, S, NH or COO
in case d = 1 and Z = CHR', with the proviso that R' = H, alkyl, aryl or alkylaryl,
and
R¹ = alkylene, arylene or alkylenearylene having from 1 to 10 carbon atoms each, wherein the said radicals may be interrupted by oxygen atoms and/or sulfur atoms and/or amino groups,
and
R² = OH,
or
A = O, S, NH or COO
in case d = 0 and
R¹ = alkylene, arylene or alkylenearylene having from 1 to 10 carbon atoms each, wherein the said radicals may be interrupted by oxygen atoms and/or by sulfur atoms and/or by amino groups, and
R² = OH,
or
A = S
in case d = 1 and Z = CO and
R¹ = N and
R² = H,
a = 1, 2 or 3,
b = 0, 1 or 2, with the proviso of a+b = 3,
c = 1, 2, 3 or 4.

6. Method according to any of claims 1 to 3, **characterized in that** as the compounds of general formula I, compounds of general formula I"' and/or of precondensates derived thereof are used,
{XₐR_{b}Si[(R'A)_{c}]_{(4-a-b)}}ₓB (I"')
wherein the radicals and indices have the following meaning:
A = O, S, PR", POR", NHC(O)O or NHC(O)NR",
B = straight-chain or branched organic radical derived from a compound B' having at least one (if c = 1 and A = NHC(O)O or NHC(O)NR") or at least two C=C double bounds and from 5 to 50 carbon atoms,
R = alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
R' = alkylene, arylene or alkylenearylene,
R" = hydrogen, alkyl, aryl or alkylaryl,
X = hydrogen, halogen, hydroxy, alkoxy, acyloxy, alkylcarbonyl, alkoxycarbonyl or NR"₂,
a = 1, 2 or 3,
b = 0, 1 or 2,
c = 0 or 1,
x = an integer the maximum value of which corresponds to the number of double bonds in the compound B' minus 1 or is equal to the number of double bonds in the compound B' in case c = 1 and A represents NHC(O)O or NHC(O)NR",
wherein the above alkyl and alkenyl radicals, respectively, are optionally substituted straight-chain, branched or cyclic radials having from 1 or, respectively, 2 to 20 carbon atoms, aryl is optionally substituted phenyl, naphthyl or biphenyl, and the above alkoxy, acyloxy, alkylcarbonyl, alkoxycarbonyl, alkylaryl, arylalkyl, arylene, alkylene, and alkylenearyl radicals are derived from the above-defined alkyl and aryl radicals.

7. Method according to any of claims 1 to 3, **characterized in that** as the compounds of general formula I, compounds of general formula I"" and/or of precondensates derived thereof are used,
YₐSiXₓR₄₋ₐ₋ₓ (I"")
wherein the radicals and indices have the following meaning:
R = alkyl, alkenyl, aryl, alkylaryl or arylalkyl having from 1 to 20 carbon atoms each, wherein said radicals may contain oxygen and/or sulfur atoms and/or ester and/or carbonyl and/or carboxy and/or amide and/or amino groups,
X = hydrogen, halogen, hydroxy, alkoxy, acyloxy, alkylcarbonyl, alkoxycarbonyl or NR"₂,
wherein R" is hydrogen, alkyl, aryl or alkylaryl,
Y = an organic radical having from 1 to 30, preferably from 1 to 20 carbon atoms and from 1 to 5, preferably from 1 to 4 mercapto groups.
a = 1, 2 or 3,
x = 1, 2 or 3, with the proviso that a+x = 2, 3 or 4.

8. Method according to claim 7, **characterized in that** as the silanes of general formula I"", silanes of general formula V are used,
[(HS-R⁵ )ₙR⁶-S-E-R⁵]ₐSiXₓR₄₋ₐ₋ₓ (V)
wherein the radicals and indices have the following meaning:
E = -CO-NH-, -CS-NH-, -CH₂-CH₂- or -CH₂-CH(OH)-
R = as defined for general formula IV;
R⁵ = alkylene, arylene, arylenealkylene or arylenealkylene having from 0 to 20 carbon atoms each, wherein the said radicals may be interrupted by oxygen atoms and/or by sulfur atoms and/or by ester and/or by carbonyl and/or by carboxy and/or by amide and/or by amino groups;
R⁶ = alkylene, arylene, arylenealkylene or arylenealkylene having from 0 to 20 carbon atoms each, wherein the said radicals may be interrupted by oxygen atoms and/or sulfur atoms and/or by ester and/or by carbonyl and/or by carboxy and/or by amide and/or by amino groups;
X = as defined for general formula IV;
a = as defined for general formula IV;
n = 2, 3, 4 or 5;
x = as defined for general formula IV.

9. Method according to one or more of claims 1 to 8, **characterized in that** a spinning mass is used which contains one or more organic compounds having one or more mercapto groups.

10. Method according to one or more of claims 1 to 9, **characterized in that** a spinning mass is used which contains one or more organic compounds having one or more substituted and/or unsubstituted amino groups.

11. Method according to one or more of claims 1 to 10, **characterized in that** a spinning mass is used which contains one or more salts and/or one or more liquids and/or one or more blowing agents and/or one or more porous fillers as additives in order to generate pores.

12. Method according to one or more of claims 1 to 11. **characterized in that** after curing, the pore generating additives are eluted and/or removed via thermal treatment.

13. Inorganic hollow fibers comprising pores in the nanometer or subnanometer range, obtained by the preparation method according to any of claims 1 to 12.

14. Inorganic hollow fiber according to claim 13, containing 1 to 99 % by weight SiO₂ and 0 to 99 % by weight Al₂O₃ and/or 0 to 40 % by weight B₂O₃ and/or 0 to 50 % by weight TiO₂ and/or 0 to 99 % by weight ZrO₂.

15. inorganic hollow fiber according to claim 14, **characterized by** 0 to 10 % by weight LiO₂ and/or 0 to 10 % by weight Na₂O and/or 0 to 20 % by weight MgO and/or 0 to 20 % by weight CaO and/or 0 to 20 % by weight SrO and/or 0 to 20 % by weight BaO and/or 0 to 20 % by weight ZnO and/or 0 to 20 % by weight SnO and/or 0 to 20 % by weight PbO.

16. Use of the hollow fibers according to any of claims 13 to 15 in separation procedures and for the exchange of gases.

## Revendications

1. Procédé de fabrication de fibres creuses inorganiques ayant des pores dans la plage du nanomètre et/ou dans la plage inférieure au nanomètre, **caractérisé en ce que** l'on transforme une masse à filer en fibre creuse selon des procédés habituels, **en ce que** l'on sèche éventuellement la fibre creuse, **en ce que** l'on durcit la fibre creuse éventuellement séchée par polymérisation et/ou polyaddition via une induction thermique et/ou une induction par rayonnement et/ou une induction chimique, et **en ce que** l'on élimine par pyrolyse les constituants organiques de la fibre creuse durcie, laquelle masse à filer est obtenue :
a) par polycondensation hydrolytique
■ de un ou de plusieurs composés de formule générale I et/ou de précondensats dérivés de ceux-ci,
SiXₐR'_{b}R_{(4-a-b)} (I)
où les radicaux et les indices ont la signification suivante :
R représente un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
R' représente un radical organique ayant 1 à 50 atomes de carbone et au moins un groupement que l'on peut soumettre à une polymérisation ou à une polyaddition,
X représente l'hydrogène, un halogène, un groupement hydroxy, alcoxy, acyloxy, alkylcarbonyle, alcoxycarbonyle ou NR"₂, R" représentant l'hydrogène, un groupement alkyle ou aryle,
a est égal à 1, 2 ou 3,
b est égal à 1, 2 ou 3, avec a+b = 2, 3 ou 4, et
■ d'un ou de plusieurs composés éventuellement complexés de formules générales II et/ou III et/ou de précondensats dérivés de ceux-ci,
M¹R°₃ (II)
M²X_{y}R_{z} (III)
où M¹ représente l'aluminium ou le bore et M² représente le titane ou le zirconium, les radicaux X, R° et R sont identiques ou différents, R° représente un halogène, un groupement hydroxy, alcoxy ou acyloxy, y est un nombre entier de 1 à 4, z est égal à 0, 1, 2 ou 3, y+z valant 4, et X et R sont tels que définis dans le cas de la formule générale I,
et, éventuellement,
■ d'un ou de plusieurs composés de formule générale IV et/ou de précondensats dérivés de ceux-ci,
XₐSiR₄₋ₐ (IV)
où les radicaux et les indices ont la signification suivante :
R représente un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
X représente l'hydrogène, un halogène, un groupement hydroxy, alcoxy, acyloxy, alkylcarbonyle, alcoxycarbonyle ou NR"₂,
R" représentant l'hydrogène, un groupement alkyle, aryle ou alkylaryle,
a est égal à 1, 2 ou 3,
et/ou
■ d'un ou de plusieurs composés des éléments Li, Na, Mg, Ca, Sr, Ba, Zn, Sn ou Pb pouvant être soumis à une co-condensation,
la polycondensation hydrolytique s'effectuant par addition d'eau ou d'humidité et éventuellement en présence d'un solvant et/ou d'un catalyseur de condensation et, par rapport aux monomères, le rapport molaire du composé de formule I à la somme des composés de formules II et III se situant entre 99:1 et 1:99,
et, éventuellement,
b) par addition
■ d'un ou de plusieurs monomères et/ou oligomères pouvant être copolymérisés et/ou (poly)additionnés, et/ou
■ d'un ou de plusieurs catalyseurs de durcissement, et/ou
■ d'un ou de plusieurs additifs produisant des pores, et/ou
■ d'un ou de plusieurs composés des éléments Li, Na, Mg, Ca, Sr, Ba, Zn, Sn et Pb solubles dans le milieu réactionnel.

2. Procédé selon la revendication 1, **caractérisé en ce que** l'on transforme d'abord par craquage thermique la fibre creuse fabriquée à partir du polycondensat et renforcée par polymérisation et/ou polyaddition en une étape intermédiaire contenant du carbone et **en ce que** l'on élimine ensuite le carbone résiduel de cette étape intermédiaire contenant du carbone sous une atmosphère oxydante.

3. Procédé selon la revendication 2, **caractérisé en ce que** l'on effectue le craquage thermique à une température de 350 à 650 °C et/ou l'élimination du carbone résiduel à une température de 500 à 600 °C.

4. Procédé selon l'une quelconque des revendications précédentes, **caractérisé en ce que** l'on utilise, comme composés de formule générale I, des composés de formule générale I' et/ou des précondensats dérivés de ceux-ci, 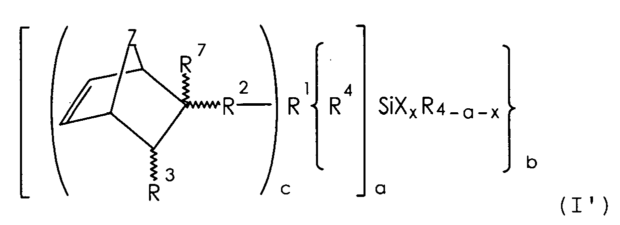 dans laquelle les radicaux et les indices ont la signification suivante :
R représente un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
R¹ représente un groupement alkylène, arylène, arylène-alkylène ou arylène-alkylène ayant respectivement 0 à 20 atomes de carbone, ces radicaux pouvant contenir des atomes d'oxygène et/ou de soufre et/ou des groupements ester et/ou carbonyle et/ou carboxyle et/ou amide et/ou amino,
R² représente un groupement alkylène, arylène, arylène-alkylène ou arylène-alkylène ayant respectivement 0 à 20 atomes de carbone, ces radicaux pouvant contenir des atomes d'oxygène et/ou de soufre et/ou des groupements ester et/ou carbonyle et/ou carboxyle et/ou amide et/ou amino,
R³ représente l' hydrogène, R²-R¹-R⁴-SiXₓR₃₋ₓ, un groupement carboxyle, alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
R⁴ représente -(CHR⁶-CHR⁶)ₙ-, n valant 0 ou 1, -CHR⁶-CHR⁶-S-R^{S}-, -CO-S-R⁵-, -CHR⁶-CHR⁶-NR⁶-R⁵-, -Y-CS-NH-R⁵-, -S-R⁵, -Y-CO-NH-R⁵-, -CO-O-R⁵-, -Y-CO-C₂H₃(COOH)-R⁵-, -Y-CO-C₂H₃(OH)-R⁵- ou -CO-NR⁶-R⁵-,
R⁵ représente un groupement alkylène, arylène, arylène-alkylène ou arylène-alkylène ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
R⁶ représente l'hydrogène, un groupement alkyle ou aryle ayant 1 à 10 atomes de carbone,
R⁷ représente l'hydrogène, un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
X représente l'hydrogène, un halogène, un groupement hydroxy, alcoxy, acyloxy, alkylcarbonyle, alcoxycarbonyle ou NR"₂,
R" représentant l'hydrogène, un groupement alkyle ou aryle,
Y représente -O-, -S- ou -NR⁶-,
Z représente -O- ou -(CHR⁶)ₘ-, avec m = 1 ou 2,
a est égal à 1, 2 ou 3, si b vaut 1, a vaut 2 ou 3,
b est égal à 1, 2 ou 3, si a vaut 1, b vaut 2 ou 3,
c a une valeur de 1 à 6,
x est égal à 1, 2 ou 3, avec a+x = 2, 3 ou 4.

5. Procédé selon l'une quelconque des revendications 1 à 3, **caractérisé en ce que** l'on utilise, comme composés de formule générale I, des composés de formule générale I " et/ou des précondensats dérivés de ceux-ci, 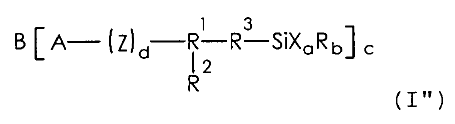 où les radicaux et les indices ont la signification suivante :
B représente un radical organique à chaîne linéaire ou ramifiée avec au moins une double liaison C=C et 4 à 50 atomes de carbone,
R représente un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
R³ représente un groupement alkylène, arylène, arylène-alkylène ou alkylène-arylène ayant respectivement 0 à 10 atomes de carbone, ces radicaux pouvant être interrompus par des atomes d'oxygène et/ou de soufre et/ou par des groupements amino,
X représente l'hydrogène, un halogène, un groupement hydroxy, alcoxy, acyloxy, alkylcarbonyle, alcoxycarbonyle ou NR"₂,
R" représentant l'hydrogène, un groupement alkyle, aryle ou alkylaryle,
A représente 0, S ou NH,
d étant égal à 1 et Z représentant CO, et
R¹ représente un groupement alkylène, arylène ou alkylène-arylène ayant respectivement 1 à 10 atomes de carbone, ces radicaux pouvant être interrompus par des atomes d'oxygène et/ou de soufre et/ou par des groupements amino, et
R² représente COOH ou H,
ou
A représente 0, S, NH ou COO,
d étant égal à 1 et Z représentant CHR', R' étant l'hydrogène, un groupement alkyle, aryle ou alkylaryle, et
R¹ représente un groupement alkylène, arylène ou alkylène-arylène ayant respectivement 1 à 10 atomes de carbone, ces radicaux pouvant être interrompus par des atomes d'oxygène et/ou de soufre et/ou par des groupements amino, et
R² représente OH,
ou
A représente 0, S, NH ou COO,
d étant égal à 0, et
R¹ représente un groupement alkylène, arylène ou alkylène-arylène ayant respectivement 1 à 10 atomes de carbone, ces radicaux pouvant être interrompus par des atomes d'oxygène et/ou de soufre et/ou par des groupements amino, et
R² représente OH,
ou
A représente S
d étant égal à 1 et Z représentant CO, et
R¹ représente N, et
R² représente H,
a est égal à 1, 2 ou 3,
b est égal à 0, 1 ou 2, avec a+b = 3,
c est égal à 1, 2, 3 ou 4.

6. Procédé selon l'une quelconque des revendications 1 à 3, **caractérisé en ce que** l'on utilise, comme composés de formule générale I, des composés de formule générale I"' et/ou des précondensats dérivés de ceux-ci,
{XₐR_{b}Si[(R'A)_{c}] _{(4-a-b)}}ₓB (I"')
où les radicaux et les indices ont la signification suivante :
A représente O, S, PR", POR", NHC(O)O ou NHC(O)NR",
B représente un radical organique à chaîne linéaire ou ramifiée qui dérive d'un composé B' ayant au moins une double liaison C=C (pour c = 1 et A = NHC(O)O ou NHC(O)NR") ou au moins deux doubles liaisons C=C et 5 à 50 atomes de carbone,
R représente un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
R' représente un groupement alkylène, arylène ou alkylène-arylène,
R" représente l'hydrogène, un groupement alkyle, aryle ou alkylaryle,
X représente l'hydrogène, un halogène, un groupement hydroxy, alcoxy, acyloxy, alkylcarbonyle, alcoxycarbonyle ou NR"₂,
a est égal à 1, 2 ou 3,
b est égal à 0, 1 ou 2,
c est égal à 0 ou 1,
x est un nombre entier, dont la valeur maximale correspond au nombre de doubles liaisons dans le composé B' moins 1, ou est identique au nombre de doubles liaisons dans le composé B', si c est égal à 1 et A représente NHC(O)O ou NHC(O)NR",
les radicaux alkyle ou alcényle précités étant des radicaux linéaires, ramifiés ou cycliques, éventuellement substitués, ayant 1 ou 2 à 20 atomes de carbone, un groupement aryle représentant un groupement phényle, naphtyle ou biphényle éventuellement substitué et les radicaux alcoxy, acyloxy, alkylcarbonyle, alcoxycarbonyle, alkylaryle, arylalkyle, arylène, alkylène et alkylène-aryle précités dérivant des radicaux alkyle et aryle définis ci-dessus.

7. Procédé selon l'une quelconque des revendications 1 à 3, **caractérisé en ce que** l'on utilise, comme composés de formule générale I, des composés de formule générale I"" et/ou des précondensats dérivés de ceux-ci,
YₐSiXₓR₄₋ₐ₋ₓ (I"")
où les radicaux et les indices ont la signification suivante :
R représente un groupement alkyle, alcényle, aryle, alkylaryle ou arylalkyle ayant respectivement 1 à 20 atomes de carbone, ces radicaux pouvant contenir des atomes d'oxygène et/ou de soufre et/ou des groupements ester et/ou carbonyle et/ou carboxyle et/ou amide et/ou amino,
X représente l'hydrogène, un halogène, un groupement hydroxy, alcoxy, acyloxy, alkylcarbonyle, alcoxycarbonyle ou NR"₂,
R" représentant l'hydrogène, un groupement alkyle, aryle ou alkylaryle,
Y représente un radical organique ayant 1 à 30, de préférence 1 à 20 atomes de carbone, et 1 à 5, de préférence 1 à 4 groupements mercapto,
a est égal à 1, 2 ou 3,
x est égal à 1, 2 ou 3, avec a+x = 2, 3 ou 4.

8. Procédé selon la revendication 7, **caractérisé en ce que** l'on utilise, comme silanes de formule générale I"", des silanes de formule générale V
[(HS-R⁵)ₙR⁶-S-E-R⁵]ₐSiXₓR₄₋ₐ₋ₓ (V)
dans laquelle les radicaux et les indices ont la signification suivante :
E représente -CO-NH-, -CS-NH-, -CH₂-CH₂- ou -CH₂-CH(OH)-,
R est tel que défini dans le cas de la formule générale IV ;
R⁵ représente un groupement alkylène, arylène, arylène-alkylène ou arylène-alkylène ayant respectivement 1 à 20 atomes de carbone,
ces radicaux pouvant être interrompus par des atomes d'oxygène et/ou de soufre et/ou par des groupements ester et/ou carbonyle et/ou carboxyle et/ou amide et/ou amino ;
R⁶ représente un groupement alkylène, arylène, arylène-alkylène ou arylène-alkylène ayant respectivement 1 à 20 atomes de carbone,
ces radicaux pouvant être interrompus par des atomes d'oxygène et/ou de soufre et/ou par des groupements ester et/ou carbonyle et/ou carboxyle et/ou amide et/ou amino ;
X est tel que défini dans le cas de la formule générale IV ;
a est tel que défini dans le cas de la formule générale IV ;
n est égal à 2, 3, 4 ou 5;
x est tel que défini dans le cas de la formule générale IV.

9. Procédé selon l'une quelconque des revendications 1 à 8, **caractérisé en ce que** l'on utilise une masse à filer qui contient un ou plusieurs composés organiques avec un ou plusieurs groupements mercapto.

10. Procédé selon l'une quelconque des revendications 1 à 9, **caractérisé en ce que** l'on utilise une masse à filer qui contient un ou plusieurs composés organiques avec un ou plusieurs groupements amino substitués et/ou non substitués.

11. Procédé selon l'une quelconque des revendications 1 à 10, **caractérisé en ce que** l'on utilise une masse à filer qui contient, comme additifs produisant des pores, un ou plusieurs sels et/ou un ou plusieurs liquides et/ou un ou plusieurs agents moussants et/ou une ou plusieurs charges poreuses.

12. Procédé selon l'une quelconque des revendications 1 à 11, **caractérisé en ce que**, après le durcissement, on élimine et/ou on enlève par traitement thermique les additifs produisant les pores.

13. Fibres creuses inorganiques avec des pores dans la plage du nanomètre et/ou dans la plage inférieure au nanomètre, que l'on obtient selon le procédé de fabrication tel que défini selon l'une quelconque des revendications 1 à 12.

14. Fibres creuses inorganiques selon la revendication 13, comprenant 1 à 99 % en poids de SiO₂ et 0 à 99 % en poids de Al₂O₃ et/ou 0 à 40 % en poids de B₂O₃ et/ou 0 à 50 % en poids de TiO₂ et/ou 0 à 99 % en poids de ZrO₂.

15. Fibres creuses inorganiques selon la revendication 14, **caractérisées par** 0 à 10 % en poids de LiO₂ et/ou 0 à 10 % en poids de Na₂O et/ou 0 à 20 % en poids de MgO et/ou 0 à 20 % en poids de CaO et/ou 0 à 20 % en poids de SrO et/ou 0 à 20 % en poids de BaO et/ou 0 à 20 % en poids de ZnO et/ou 0 à 20 % en poids de SnO et/ou 0 à 20 % en poids de PbO.

16. Utilisation des fibres creuses selon l'une quelconque des revendications 13 à 15 dans des procédés de séparation et pour l'échange gazeux.
